# EUROPEAN PATENT SPECIFICATION

(11) **EP 2 834 082 B1**
(45) Date of publication and mention of the grant of the patent: **30.12.2020**
(21) Application number: 13772221.1
(22) Date of filing: 03.04.2013
(51) Int. Cl.: B60B 9/26, B60C 7/18, B60C 7/14

(54) **SPOKE FOR A TIRE WITH OPTIMIZED THICKNESS FOR IMPROVED DURABILITY**
SPEICHE FÜR EINEN REIFEN MIT OPTIMIERTER DICKE FÜR VERBESSERTE HALTBARKEIT
RAYON POUR UN PNEU AYANT UNE ÉPAISSEUR OPTIMISÉE POUR UNE DURÉE DE VIE AMÉLIORÉE

(30) Priority: 05.04.2012 US 201261620687 P
(43) Date of publication of application: 11.02.2015
(73) Proprietor: Compagnie Générale des Etablissements Michelin, 63000 Clermont-Ferrand (FR)
(72) Inventor: CRON, Steven, M., Grenville, SC 29605 (US); RHYNE, Timothy, Brett, Grenville, SC 29605 (US)
(74) Representative: Casalonga
(86) International application number: PCT/US2013/035064
(87) International publication number: WO 2013/152067

(56) References cited:
- WO-A2-2012/030519
- DE-U1- 20 000 034
- JP-A- 2011 025 758
- JP-A- 2012 006 560
- JP-A- 2012 006 560
- US-A- 1 438 604
- US-A- 3 219 090
- US-A1- 2009 115 590
- US-B2- 8 019 502
- 'Bridgestone announces development of non-pneumatic (airless) concept tire' CORPORATE NEWS ARTICLE 29 November 2011, XP055161067 Retrieved from the Internet: <URL:http://www.bridgestone.com/corporate/n ews/2011112901.html> [retrieved on 2013-06-13]

## Description

### Priority Claim

This application claims the benefit of previously filed U.S. Provisional Patent Application entitled "Spoke for a Tire with Optimized Thickness for Improved Durability", assigned U.S. Serial No. 61/620,687; filed on April 5, 2012,

### Background of the Invention

### Field of the Invention

The present invention provides spoke geometry for a non-pneumatic tire that is less prone to fatigue when used. In particular, the spoke geometry is provided with an optimized thickness profile over the length of the spoke. This optimization results in a reduction in the peak strain energy density levels in the spoke, thereby reducing the likelihood of crack initiation and propagation which in turn enhances the durability of the spoke and tire.

### Description of the Related Art

Non-pneumatic or structurally supported tires have been disclosed in the art (see for instance documents DE 200 00 034 U1 and JP 2012 006560 A). For example, U.S. Patent No. 7,201,194, commonly owned by the applicant of the present invention, relates to a structurally supported resilient tire that supports a load without internal air pressure. In an exemplary embodiment, this non-pneumatic tire includes an outer annular shear band and a plurality of web spokes that extend transversely across and radially inward from the annular band and are anchored in a wheel or hub. In certain exemplary embodiments, the annular shear band may further comprise a shear layer, at least a first membrane adhered to the radially inward extent of the shear layer and at least a second membrane adhered to the radially outward extent of the shear layer. In addition to the ability to operate without a required inflation pressure, the invention of U.S. Patent No. 7,201,194 also provides advantages that include a more uniform ground contact pressure throughout the length of the contact area. Hence, this tire mimics the performance of a pneumatic tire.

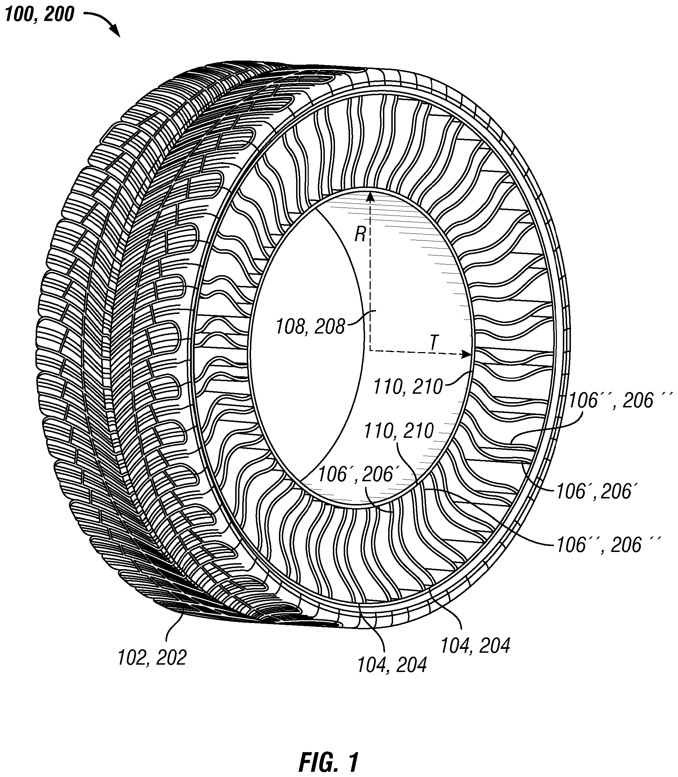

FIG. **1** shows such a tire, defining a radial direction **R** and transverse direction **T** (which is perpendicular to the radial direction and perpendicular to the direction in which the tire rolls). For reference, all the reference numerals in the **100's** used herein refer to a previous tire and spoke design while all reference numerals in the **200's** used herein refer to a new and improved tire and spoke design according to an embodiment of the present invention. The tire **100, 200** comprises a tread **102, 202** that is attached to the outward extent **104, 204** of the spokes **106, 206,** which in turn, are connected to a hub or wheel **108, 208** at their inward extent **110, 210** by means known in the art. For the version of the tire **100, 200** shown, the spokes **106, 206** are formed by pouring a polyurethane liquid into a mold, such as a rotational mold, where the liquid is then cured or hardened. It can also be seen that the spokes **106, 206** are grouped in pairs and that the individual spokes **106', 106", 206', 206"** within each pair are consistently spaced from each other and that each pair is spaced consistently from the adjacent pair around the circumference of the tire. The spacing within each pair and the spacing between each adjacent pair do not need to be the same.

As described by the Abstract and col. 2, lines 28 - 41 of the '194 patent, the spokes **106, 206** support the tire **100, 200** in tension near the top of the tire **100, 200** and not in compression. Instead, the spokes **106, 206** at the bottom of the tire near the contact patch, which is where the tread **102, 202** of the tire contacts the road, compress or buckle easily. This helps the tire to simulate the pneumatic support function of a pneumatic tire. As can be imagined, these spokes **106, 206** undergo a great deal of cyclic stress from tension to compression especially as the tire **100, 200** rotates at high speeds. This creates a risk of fatigue failure for the spokes. Consequently, the endurance of the spokes **106, 206** and the operability of the tire **100, 200** depend significantly on the geometry with which the spokes **106, 206** are made.

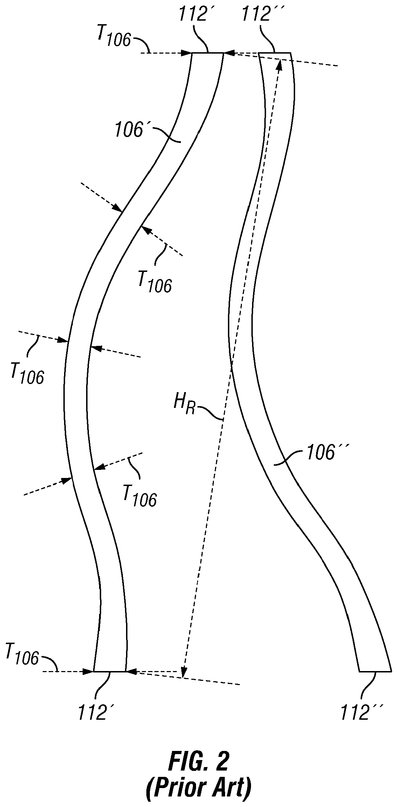

Looking now at FIG. **2** a side sectional view of a previous spoke design that is susceptible to fatigue failure caused by crack initiation and propagation is shown. For the sake of clarity, only the spokes are shown. The thickness of the spoke, **T₁₀₆,** is relatively consistent at 2.8 mm, and the ends **112', 112"** of the spokes **106', 106"** where the spokes connect to the hub and tread are about 1 mm thicker at 3.8 mm. Hence, there is a transition area at either end of the spoke where the thickness of the spoke tapers down so that at roughly 25% of the radial height **Hᵣ** of the spoke from either end, the spoke is at the ultimate reduced thickness of 2.8 mm.

Testing of this spoke design has revealed that the fatigue limits of the spoke limits the load capacity of the tire. If the load is too great, then the tire a tendency over time to develop cracks that eventually propagate as the spoke **106** cycles between tension and compression as the tire **100** rolls on a road surface. Accordingly, there is a need for an improved spoke design that reduces the likelihood that crack initiation and propagation will occur at higher load limits. Also, such a design that can be easily molded and that does not degrade other tire performances would be particularly beneficial.

### Summary of the Invention

A non-pneumatic tire according to an aspect of the present invention defines radial and transverse directions and comprises a tread and a spoke having body geometry and including a thickness that varies along the length of the spoke along the general radial direction that starts at one value, that gradually reduces to a second value at a first inflection point of the centerline of the spoke, that then gradually increases to a third value at a midpoint of the centerline of the spoke, that then reduces to a fourth value at a second inflection point of the centerline of the spoke and that then increases again to a fifth value wherein the length of said spoke follows a path and said path is offset from a perfectly straight path from a first end of said spoke to a second end of said spoke.

In some cases, the first, third and fifth values of the thickness of the spoke are substantially the same. When this is the case, the second and fourth values of the thickness of the spoke may also be the same. In such a case, the second and fourth values of the thickness may be 60% the value of the first, third and fifth values. In a particular embodiment when the tire is a 205/55N16 sized tire, the first, third and fifth values of the thickness of the spoke is approximately 3.4 mm while the second and fourth values of the thickness of the spoke is approximately 2.0 mm. In such a case, the radial height of the spokes may be approximately 76 mm. Also the spoke has an offset or deviation of the spoke from a perfectly straight path between the two ends of the spoke and said offset may be 25% or less of the radial height, and preferably may be around 15% of the radial height. The spoke of such a tire may be able to elastically deform when subjected to a deflection of 15 mm toward the center of the tire.

In some cases when the thickness of the spoke increases and decreases twice along the length of the spoke, the spoke may comprise four zones or regions and may have a centerline along the length of the spoke wherein said centerline has two inflection points and a midpoint found between said inflection points along the centerline. The first value of the thickness of the spoke may be found at one end of the spoke while the fifth value of the thickness of the spoke may be found at the other end of the spoke. In such a case, the first zone may be a transition region between said first end and a first inflection point where the thickness reduces to the second value, the second zone may be a transition region between said first inflection point and said midpoint where the thickness increases to the third value, the third zone may be a transition region between the midpoint and the second inflection point where the thickness increases to the fourth value, and the fourth zone may a transition region between the second inflection point and the other end of the spoke where the thickness increases to the fifth value.

Again in such a case, the second and fourth values of the thickness may be 60% the value of the first, third and fifth values. In a particular embodiment when the tire is a 205/55N16 sized tire, the first, third and fifth values of the thickness of the spoke is approximately 3.4 mm while the second and fourth values of the thickness of the spoke is approximately 2.0 mm. In such a case, the radial height of the spokes may be approximately 76 mm. Also the spoke may have an offset or deviation of the spoke from a perfectly straight path along the radial direction and said offset may be 25% or less of the radial height, and preferably may be around 15% of the radial height. The spoke of such a tire may be able to elastically deform when subjected to a deflection of 15 mm toward the center of the tire.

In any of the above embodiments, the centerline may be constructed of a series of analytical curves such as lines and arcs and the boundaries of the spoke on either side of the centerline may also be constructed of a series of analytical curves such as lines and arcs. Also, any of the above embodiments could have spokes made from polyurethane such as that sold under the trade name VIBRATHANE B836. In some cases, the tire comprises a series of spokes that are paired having identical spoke geometries that repeat around the circumference of the tire.

### Brief Description of the Drawings

A full and enabling disclosure of the present subject matter, including the best mode thereof, directed to one of ordinary skill in the art, is set forth in the specification, which makes reference to the appended FIGS., in which:
FIG. **1** is a perspective view of a non-pneumatic tire that has spokes.
FIG. **2** is a side sectional view of a pair of spokes of a first configuration that have been used previously in a non-pneumatic tire with the tread and shear ring removed for clarity taken along the midplane of the tire, which is the plane that is parallel to the radial direction of the tire and is coincident with the midpoint of the tire in the transverse direction of the tire.
FIG. **3** is a side sectional view of a pair of spokes of a first embodiment of the present invention with the tread removed for clarity taken along the midplane of the tire, which is the plane that is parallel to the radial direction of the tire and is coincident with the midpoint of the tire in the transverse direction of the tire.
FIG. **4A** is a plot of FEA results for a previous spoke design and a spoke design according to an embodiment of the present invention in both deflected and non-deflected states, showing the peak strain energy density associated with both designs at a deflection of 15 mm.
FIG. **4B** is a plot of the FEA results of FIG 4A shown at an angle from the transverse directions so that the peak stresses found near the middle of the spokes can be more clearly seen.
FIG. **4C** is a graph of the peak strain energy density associated with a spoke of the previous design with the design of an embodiment of the present invention, plotted according to the data found in Table 1.
FIG. **4D** is a graph showing the more efficient use of material of the design according to an embodiment of the present invention as compared to the previous spoke design.

### Detailed Description of Particular Embodiments

Reference will now be made in detail to embodiments of the invention, one or more examples of which are illustrated in the FIGS. Each example is provided by way of explanation of the invention, and not meant as a limitation of the invention. Reference numbers are used in the FIGS. solely to aid the reader in identifying the various elements and are not intended to introduce any limiting distinctions among the embodiments.

Given the tendency of the previous geometry to fail at times due to fatigue attributable to crack initiation and propagation, the inventors of the present invention proceeded to theorize how to improve the geometry so that this phenomenon occurs less frequently. Experience demonstrated that a design that has a reduced peak strain energy density would have a corresponding reduction in crack initiation and propagation. Accordingly, they used an iterative process to determine what geometry could affectively lower the peak strain energy density and what is described below is what they have found to be an effective solution as supported by FEA results. As described below, this design lowers peak strain energy density by approximately 40%, which based on empirical data, should result in about a 200% improvement in the fatigue life of the spoke. As will also be further detailed below, this amount of improvement and the geometry that produces such an improvement at the same mass and stiffness of the spoke without degrading other tire performances is an unexpected result.

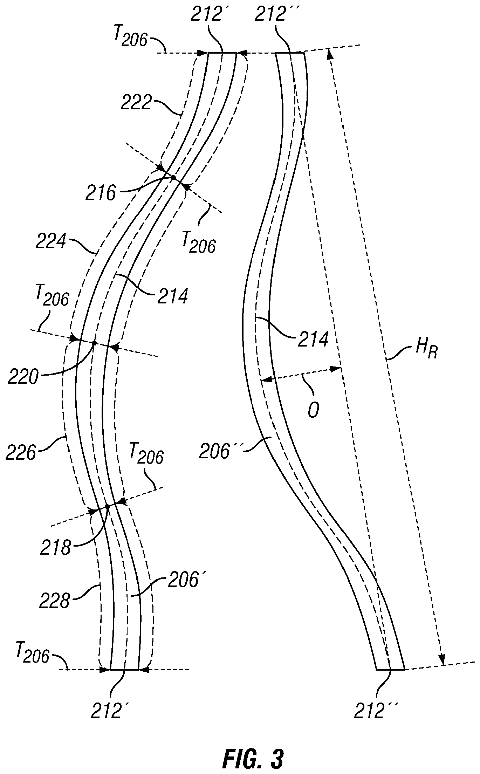

Turning now to FIG. 3 a side sectional view of the spokes according to one embodiment of the present invention can be seen. For the sake of clarity, the spokes are removed from the rest of the structure. Looking at the cross-sectional shape of spokes **206', 206",** it should be noted that the thickness of the body of the spoke, **T₂₀₆,** varies throughout the length of the spoke along the radial direction of the tire between the ends **212', 212"** of the spokes **206', 206".** Also, the shape of the spoke is such that it has centerline **214** with two inflection points **216, 218** about which the curvature of the spoke changes direction and a midpoint **220** that is found between the two inflection points. Also, there is a radial height **Hᵣ** which is the straight distance in the radial direction along which the centerline of the spoke could extend but does not due to the inflection points.

Furthermore, there is an offset **O** or deviation that the centerline of the of the spoke makes from **Hᵣ** that can be measured in a direction that is perpendicular from **Hᵣ** to the centerline **214** and for these particular spokes this offset reaches its maximum at the midpoint **220.** Also, the inflection points are located at a distance that is roughly equal to 25% of the value **Hᵣ** from either end of the spoke. For this embodiment, the thickness at one end **212'** of the spoke gradually decreases until it reaches a minimum at the first inflection point **216.** The section of the spoke between the first end **212'** and the first inflection point **216** can be referred to as zone one **222.** The spoke then increases in thickness until it reaches the midpoint **220** where it reaches a maximum. This region between the first inflection point **216** and the midpoint **220** can be called zone two **224.** The spoke then begins to decrease in thickness until it reaches the second inflection point **218** where it reaches another minimum. The region between the midpoint **220** and the second inflection point **218** may be referred to as zone three **226.** Finally, the spoke begins to grow thicker until it reaches the other end **212'** of the spoke where it reaches another maximum. The region between the second inflection point **218** and the other end of the spoke **212'** may be called zone four **228.**

For this embodiment, the tire was a 205/55N16 sized tire, which means that the depth of the spokes in the transverse direction of the tire is about 205 mm near the tread and 155 mm near the hub due to the concave profile of the front and back extremities of the spokes (as best seen in FIG. 1). The thickness of the spoke ends **212'** and the midpoint **220,** are all approximately the same amount at about 3.4 mm while the thickness of the spoke at the inflection points are roughly the same at about 2.0 mm. This means that the ratio of the thinnest areas of the spokes to the thickest is approximately 60%. These spokes were designed to elastically deform when deflected by 15 mm in the radial direction toward the center of the tire. Radial Height **Hᵣ** of the spokes for this tire is approximately 76 mm and the offset **O** is approximately 12 mm. Hence for this tire the ratio of O to Hᵣ is about 15% but it is contemplated that this could be larger such as 25% or less such as 0% in cases where the spoke is completely straight.

Furthermore, it is contemplated that relative thicknesses of the ends of the spokes and the middle portion of the spoke can be varied as well as the thickness of the spoke at the inflection points so long as the spoke continues to increase and decrease in thickness along the length of the centerline of the spoke. For example, the thickness of the first end of the spoke could be 3.4 mm, the thickness of the spoke at the first inflection point could be 2.4 mm, the thickness of the spoke at the midpoint could be 3.0 mm, the thickness of the spoke at the second inflection point could be 1.5 mm, and the thickness of the spoke at the other end could be 3.6 mm. Also, the curves that define the geometry of the spokes could be of any nature. However, for this particular embodiment the types of curves used as the centerline and inner and outer boundaries of the spokes were all analytical curves, such as lines and arcs, to ease in manufacturing and in inspection of the geometry. Also, there are practical limits to the geometry in order to enable mold manufacture and fill so the minimum thickness should not be so small to make these tasks difficult.

The spokes may be manufactured using any material that is suitable for processing and for providing the physical properties needed for the spokes to function. For example, any suitable thermosetting material may be used such as polyurethane. In particular, polyurethane sold under the trade name VIBRATHANE B836 could be used. Also, the space between various spokes and the geometry that one spoke has may differ from the geometry of another spoke.

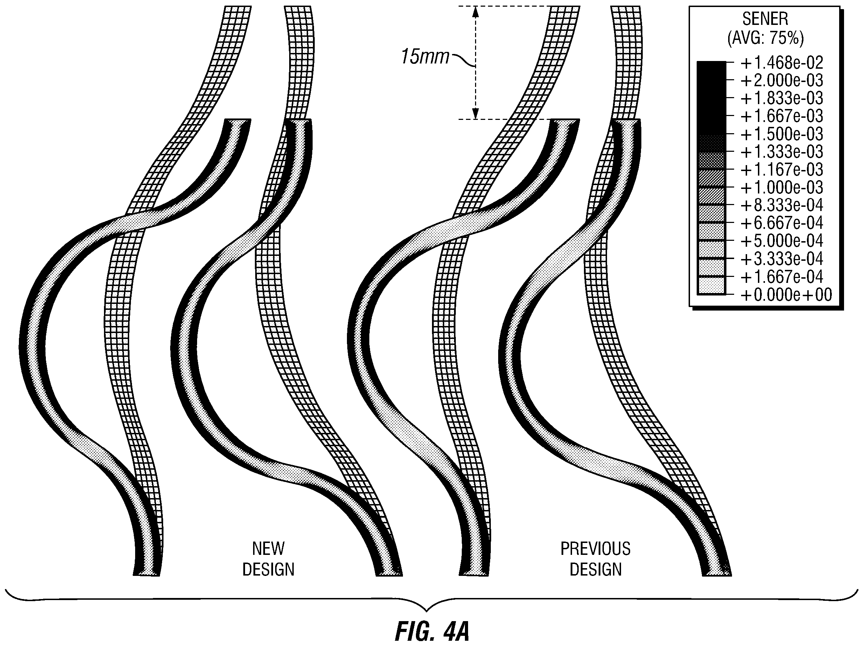

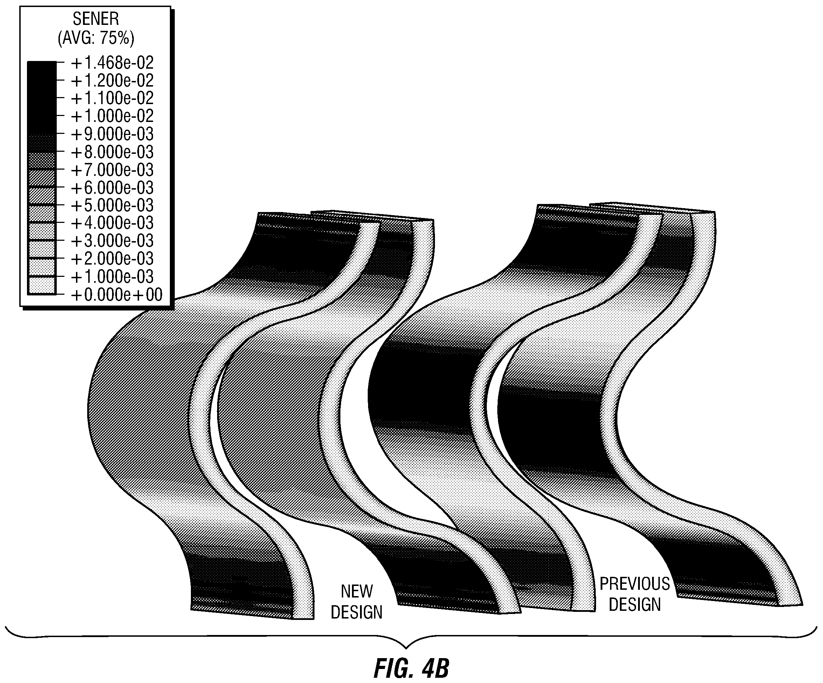

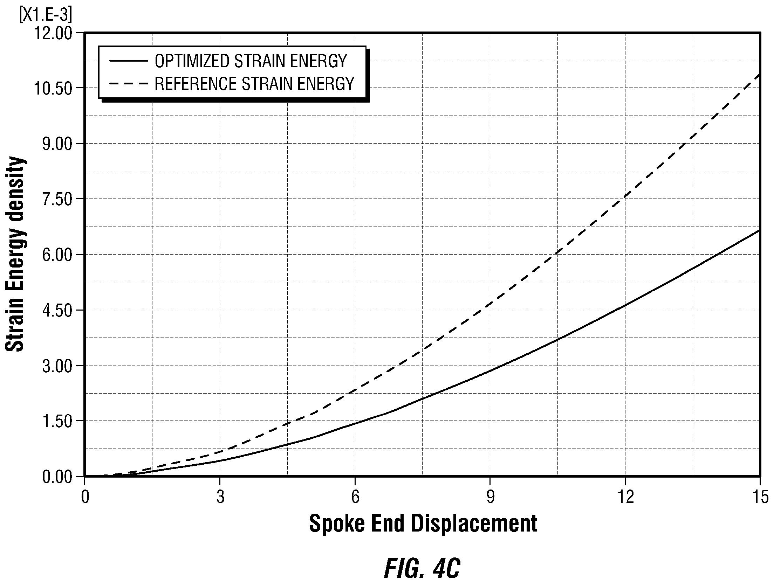

Looking at FIG. **4A****,** we see non-deflected meshes or models, made and analyzed in ABAQUS, of the previous and new designs along with deflected plots of these models showing their associated peak strain energy densities. Note that the peak strain energy at a 15 mm deflection of the old design was about 1.09 x 10⁻² (daN-mm/mm³) while the peak strain energy at a 15 mm deflection of the design according to an embodiment of the present invention was about 6.7 x 10⁻³ (daN-mm/mm³) as best seen in FIG. **4B** where these associated peak strain energy densities are found in the locations denoted by the letters "A" in the plot. By way of further illustration, the values of strain energy density versus deflection or displacement at locations "A" that have been calculated using FEA for both designs is contained in Table 1 immediately below and is shown graphically in FIG. **4C****.**

**TABLE 1**

| X Displacement | Optimized Strain Energy for New Design (daN-mm/mm³) | Ref. Strain Energy for Previous Design (daN-mm/mm³) |
|---|---|---|
| 0 mm | 0 | 0 |
| 1 mm | 52.1428E-06 | 82.4362E-06 |
| 3 mm | 415.919E-06 | 667.641E-06 |
| 5 mm | 1.04251E-03 | 1.68771E-03 |
| 7 mm | 1.87188E-03 | 3.04529E-03 |
| 9 mm | 2.86881E-03 | 4.67997E-03 |
| 11 mm | 4.01119E-03 | 6.55209E-03 |
| 13 mm | 5.28455E-03 | 8.63442E-03 |
| 15 mm | 6.67912E-03 | 10.9076E-03 |

Unexpectedly, increasing the thickness near the middle of the spoke where the peak strain energy density was the highest has actually lowered the peak strain energy more than 40%. This is truly unexpected as the equation relating strain to thickness of a beam that is well known in the art is ε=t/(2^{∗}ρ) where ε is strain, t is the thickness of the beam and p is the radius of curvature of the beam. One with ordinary skill in the art would not expect that increasing the thickness of the beam would actually decrease the strain as this equation indicates that strain linearly increases with increasing thickness. The inventors have discovered that the radius of curvature of the beam is actually a function of the thickness of the beam so that while increasing the thickness does tend to increase strain in one way, it also serves to increase the radius of curvature in a greater way, which actually results in an overall lower strain.

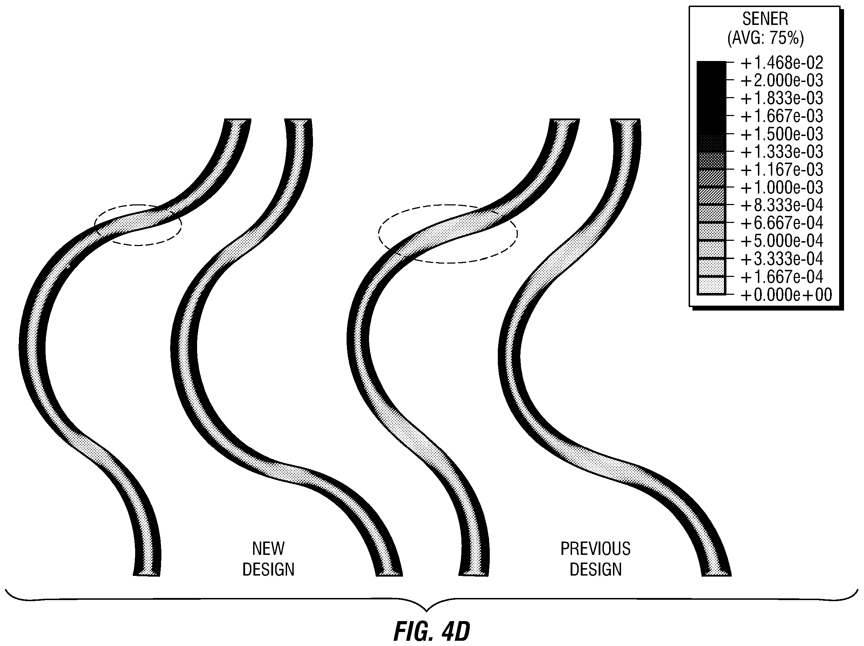

This phenomenon can be seen by looking at FIG. **4D****.** By thinning out the areas near the inflection points, these points act more like hinges so that the areas of the spoke near the midpoint actually flex less, resulting in less peak strain energy density during deformation. Also, increasing the thickness of the center of the spoke allows it to flex less and the areas near the inflection points to flex more, also contributing to the reduction of peak strain energy. So, by changing the location of rather than the amount of the mass in the spoke, an improvement in peak strain energy density is achieved. In other words, the use of the material in the spoke has become more efficient. Also, the same stiffness can be achieved allowing the load versus deflection of the spoke to remain relatively the same, thereby preserving the other performances of the spoke and tire. Alternatively, it is contemplated by the inventors that this gain in reduction in peak strain energy density and increase in the fatigue life of the spoke could be traded in for a shorter radial height of the spokes, which could result in reduced mass meaning lower rolling resistance and increased brake clearance.

It should be noted that the present invention also includes other spoke geometries not disclosed herein. For example, it is possible that the spoke can be attached by other structures near the tread and hub other than what has been described herein. In other words, any spoke design that has a section of geometry along its centerline along the general radial direction of the tire that contracts in thickness and expands in thickness at least twice between the hub and tread is an embodiment of the present invention. It should be noted that this profile was taken at the midplane of the tire, which is parallel to the circumferential direction of the tire or direction that the tire rolls and the radial direction, and that this preferred profile could vary in the transverse direction as long as the majority of the spoke has a profile that follows the geometry described herein. For example, it is contemplated that the forward and rearward extremities of the spokes in the transverse direction could have chamfered or radiused ends so that the cross-section is reduced and still be within the scope of the present invention.

Furthermore, the presence of three or more inflection points is also considered to be within the scope of the present invention provided it can provide enough flexibility for the necessary deflection when the spoke is in or near the contact patch while also not being too long to provide the needed load bearing capability in tension when the spokes are near the top of the tire opposite radially from the contact patch. Also, the location of any inflection points as may be varied as desired and the location of the maximum offset does not necessarily need to occur at midpoint of the spoke. Also, this technique can be applied to tires of different sizes and that require differing deflections.

The specific examples given have involved the use of polyurethane but it is contemplated that other thermosetting or thermoplastic materials could be used. In addition, the mold discussed herein was a rotational mold but other molding or casting technologies could be used such as injection molding.

## Claims

1. A non-pneumatic tire (200) that defines radial and transverse directions and comprises a tread (202) and a spoke (206, 206', 206") having body geometry, wherein said spoke (206, 206', 206") includes a thickness that varies along the length of the spoke (206, 206', 206") along the general radial direction that starts at one value, that gradually reduces to a second value at a first inflection point (216) of the centerline (214) of the spoke (206, 206', 206"), that then gradually increases to a third value at a midpoint (220) of the centerline (214) of the spoke (206, 206', 206"), that then reduces to a fourth value at a second inflection point (218) of the centerline (214) of the spoke (206, 206', 206") and that then increases again to a fifth value wherein the length of said spoke (206, 206', 206") follows a path and said path is offset (O) from a perfectly straight path from a first end (212', 212") of said spoke (206, 206', 206") to a second end (212', 212") of said spoke (206, 206', 206").

2. A non-pneumatic tire (200) according to claim 1 wherein the first, third and fifth values of the thickness of the spoke (206, 206', 206") are substantially the same.

3. A non-pneumatic tire (200) according to claim 2 wherein the second and fourth values of the thickness of the spoke (206, 206', 206") are substantially the same.

4. A non-pneumatic tire (200) according to claim 3 wherein the second and fourth values of the thickness of the spoke (206, 206', 206") are approximately 60% the value of the first, third and fifth values.

5. A non-pneumatic tire (200) according to claim 4 wherein the tire is a 205/55N16 sized tire, the first, third and fifth values of the thickness of the spoke (206, 206', 206") is approximately 3.4 mm while the second and fourth values of the thickness of the spoke (206, 206', 206") is approximately 2.0 mm and the tire comprises a plurality of similarly configured spokes (206, 206', 206").

6. A non-pneumatic tire (200) according to claim 5 wherein the radial height of the spoke (206, 206', 206") is approximately 76 mm.

7. A non-pneumatic tire (200) according to claim 6 wherein the spoke (206, 206', 206") has an offset (O) or deviation of its path between the two ends (212', 212") of the spoke (206, 206', 206") wherein the offset (O) is 25% or less of the radial height of the spoke (206, 206', 206"), and is preferably around 15% of the radial height of the spoke (206, 206', 206").

8. A non-pneumatic tire (200) according to claim 7 wherein the spoke (206, 206', 206") is configured to elastically deform when subjected to a deflection of 15 mm toward the center of the tire along its radial direction.

9. A non-pneumatic tire (200) according to claim 1 wherein the thickness of the spoke (206, 206', 206") increases and decreases twice along the length of the spoke (206, 206', 206") and the spoke (206, 206', 206") comprises four zones or regions (222, 224, 226, 228) and has a centerline along the length of the spoke (206, 206', 206") and wherein said centerline has two inflection points (216, 218) and a midpoint (220) found between said inflection points (216, 218) along the centerline.

10. A non-pneumatic tire (200) according to claim 9 wherein the first value of the thickness of the spoke (206, 206', 206") may be found at one end (212', 212") of the spoke (206, 206', 206") and the fifth value of the thickness of the spoke (206, 206', 206") may be found at the other end (212', 212") of the spoke (206, 206', 206") and wherein the first zone (222) is a transition region between said first end (212', 212") and a first inflection point (216) where the thickness reduces to the second value, the second zone (224) is a transition region between the first inflection point (216) and the midpoint (220) where the thickness increases to a third value, the third zone (226) is a transition region between the midpoint (220) and the second inflection point (218) where the thickness decreases to the fourth value, and the fourth zone (228) is a transition region between the second inflection point (218) and the other end (212', 212") of the spoke (206, 206', 206") where the thickness increases to the fifth value.

11. A non-pneumatic tire (200) according to claim 10 wherein the second and fourth values of the thickness is approximately 60% of the value of the first, third and fifth values.

12. A non-pneumatic tire (200) according to claim 11 wherein the tire is a 205/55N16 sized tire and the first, third and fifth values of the spoke (206, 206', 206") is approximately 3.4 mm and the second and fourth values of the thickness of the spoke (206, 206', 206") is approximately 2.0 mm and the tire comprises a plurality of similarly configured spokes (206, 206', 206").

13. A non-pneumatic tire (200) according to claim 12 wherein the spoke (206, 206', 206") has a radial height of approximately 76 mm.

14. A non-pneumatic tire (200) according to claim 13 wherein the spoke (206, 206', 206") has an offset (O) or deviation of the spoke (206, 206', 206") from a perfectly straight path along the radial direction and said offset (O) is 25% or less of the radial height of the spoke, and is preferably around 15% of the radial height of the spoke.

15. A non-pneumatic tire (200) according to claim 14 wherein the spoke (206, 206', 206") is configured to elastically deform when subjected to a deflection of 15 mm toward the center of the tire along the radial direction of the tire.

16. A non-pneumatic tire (200) according to claim 9 wherein the centerline is constructed from a series of analytical curves such as lines and arcs and the spoke (206, 206', 206") further comprises boundary curves that are also constructed from analytical curves such as lines and arcs.

## Patentansprüche

1. Nicht-pneumatischer Reifen (200), der radiale und transversale Richtungen definiert und eine Lauffläche (202) und eine Speiche (206, 206', 206") mit einer Körpergeometrie umfasst, wobei die Speiche (206, 206', 206") eine Dicke aufweist, die entlang der Länge der Speiche (206, 206', 206") entlang der allgemeinen radialen Richtung, die bei einem Wert beginnt, variiert, der an einem ersten Wendepunkt (216) der Mittellinie (214) der Speiche (206, 206', 206") allmählich auf einen zweiten Wert abnimmt, der dann allmählich auf einen dritten Wert an einem Mittelpunkt (220) der Mittellinie (214) der Speiche (206, 206', 206") ansteigt, der sich dann auf einen vierten Wert an einem zweiten Wendepunkt (218) der Mittellinie (214) der Speiche (206, 206', 206") verringert und der dann wieder auf einen fünften Wert ansteigt, wobei die Länge der Speiche (206, 206', 206") einem Weg folgt und dieser Weg gegenüber einem vollkommen geraden Weg von einem ersten Ende (212', 212") der Speiche (206, 206', 206") zu einem zweiten Ende (212', 212") der Speiche (206, 206', 206") versetzt ist (O).

2. Nicht-pneumatischer Reifen (200) nach Anspruch 1, wobei der erste, dritte und fünfte Wert der Speichendicke (206, 206', 206") im Wesentlichen gleich sind.

3. Nicht-pneumatischer Reifen (200) nach Anspruch 2, wobei der zweite und vierte Wert der Dicke der Speiche (206, 206', 206") im Wesentlichen gleich sind.

4. Nicht-pneumatischer Reifen (200) nach Anspruch 3, wobei der zweite und vierte Wert der Speichendicke (206, 206', 206") etwa 60 % des Wertes des ersten, dritten und fünften Wertes beträgt.

5. Nicht-pneumatischer Reifen (200) nach Anspruch 4, wobei der Reifen ein Reifen der Größe 205/55N16 ist, der erste, dritte und fünfte Wert der Dicke der Speiche (206, 206', 206") etwa 3,4 mm beträgt, wobei der zweite und vierte Wert der Dicke der Speiche (206, 206', 206") etwa 2,0 mm beträgt und der Reifen eine Vielzahl von ähnlich ausgelegten Speichen (206, 206', 206") umfasst.

6. Nicht-pneumatischer Reifen (200) nach Anspruch 5, wobei die radiale Höhe der Speiche (206, 206', 206") etwa 76 mm beträgt.

7. Nicht-pneumatischer Reifen (200) nach Anspruch 6, wobei die Speiche (206, 206', 206") einen Versatz (O) oder eine Abweichung ihrer Bahn zwischen den beiden Enden (212', 212") der Speiche (206, 206', 206") aufweist, wobei der Versatz (O) 25 % oder weniger der radialen Höhe der Speiche (206, 206', 206") beträgt und vorzugsweise etwa 15 % der radialen Höhe der Speiche (206, 206', 206") beträgt.

8. Nicht-pneumatischer Reifen (200) nach Anspruch 7, wobei die Speiche (206, 206', 206") so ausgelegt ist, dass sie sich elastisch verformt, wenn sie einer Durchbiegung von 15 mm zur Mitte des Reifens hin entlang seiner radialen Richtung unterworfen wird.

9. Nicht-pneumatischer Reifen (200) nach Anspruch 1, wobei die Dicke der Speiche (206, 206', 206") entlang der Länge der Speiche (206, 206', 206") sich zweimal erhöht und zweimal verringert und die Speiche (206, 206', 206") vier Zonen oder Bereiche (222, 224, 226, 228) umfasst und eine Mittellinie entlang der Länge der Speiche (206, 206', 206") aufweist und wobei die Mittellinie zwei Wendepunkte (216, 218) und einen Mittelpunkt (220) aufweist, der sich zwischen den Wendepunkten (216, 218) entlang der Mittellinie befindet.

10. Nicht-pneumatischer Reifen (200) nach Anspruch 9, wobei der erste Wert der Dicke der Speiche (206, 206', 206") an einem Ende (212', 212") der Speiche (206, 206', 206") und der fünfte Wert der Dicke der Speiche (206, 206', 206") am anderen Ende (212', 212") der Speiche (206, 206', 206") gefunden werden kann und wobei die erste Zone (222) ein Übergangsbereich zwischen dem ersten Ende (212', 212") und einem ersten Wendepunkt (216) ist, an dem die Dicke auf den zweiten Wert abnimmt, die zweite Zone (224) ein Übergangsbereich zwischen dem ersten Wendepunkt (216) und dem Mittelpunkt (220) ist, wo sich die Dicke auf einen dritten Wert erhöht, die dritte Zone (226) ein Übergangsbereich zwischen dem Mittelpunkt (220) und dem zweiten Wendepunkt (218) ist, wo die Dicke auf den vierten Wert abnimmt, und die vierte Zone (228) ein Übergangsbereich zwischen dem zweiten Wendepunkt (218) und dem anderen Ende (212', 212") der Speiche (206, 206', 206") ist, in dem sich die Dicke auf den fünften Wert erhöht.

11. Nicht-pneumatischer Reifen (200) nach Anspruch 10, wobei der zweite und vierte Wert der Dicke etwa 60 % des Wertes des ersten, dritten und fünften Wertes betragen.

12. Nicht-pneumatischer Reifen (200) nach Anspruch 11, wobei der Reifen ein Reifen der Größe 205/55N16 ist und der erste, dritte und fünfte Wert der Speiche (206, 206', 206") etwa 3,4 mm und der zweite und vierte Wert der Dicke der Speiche (206, 206', 206") etwa 2,0 mm beträgt und der Reifen eine Vielzahl von ähnlich ausgelegten Speichen (206, 206', 206") umfasst.

13. Nicht-pneumatischer Reifen (200) nach Anspruch 12, wobei die Speiche (206, 206', 206") eine radiale Höhe von etwa 76 mm aufweist.

14. Nicht-pneumatischer Reifen (200) nach Anspruch 13, wobei die Speiche (206, 206', 206") einen Versatz (O) oder eine Abweichung der Speiche (206, 206', 206") von einem vollkommen geraden Weg entlang der radialen Richtung aufweist und der Versatz (O) 25 % oder weniger der radialen Höhe der Speiche und vorzugsweise etwa 15 % der radialen Höhe der Speiche beträgt.

15. Nicht-pneumatischer Reifen (200) nach Anspruch 14, wobei die Speiche (206, 206', 206") so ausgelegt ist, dass sie sich elastisch verformt, wenn sie einer Durchbiegung von 15 mm in Richtung der Mitte des Reifens entlang der radialen Richtung des Reifens unterworfen wird.

16. Nicht-pneumatischer Reifen (200) nach Anspruch 9, wobei die Mittellinie aus einer Reihe von analytischen Kurven, wie zum Beispiel Linien und Bögen, aufgebaut ist und die Speiche (206, 206', 206") ferner Grenzkurven umfasst, die ebenfalls aus analytischen Kurven, wie zum Beispiel Linien und Bögen, aufgebaut sind.

## Revendications

1. Pneu non pneumatique (200) qui définit des directions radiale et transversale et comprend une bande de roulement (202) et un rayon (206, 206', 206'') ayant une géométrie de corps,
dans lequel ledit rayon (206, 206', 206'') comporte une épaisseur qui varie le long de la longueur du rayon (206, 206', 206") le long de la direction radiale générale qui commence à une valeur, qui se réduit progressivement jusqu'à une deuxième valeur à un premier point d'inflexion (216) de la ligne centrale (214) du rayon (206, 206', 206"), qui augmente ensuite progressivement jusqu'à une troisième valeur à un point médian (220) de la ligne centrale (214) du rayon (206, 206', 206''), qui se réduit ensuite jusqu'à une quatrième valeur à un second point d'inflexion (218) de la ligne centrale (214) du rayon (206, 206', 206'') et qui augmente ensuite à nouveau jusqu'à une cinquième valeur, dans lequel la longueur dudit rayon (206, 206', 206'') suit un chemin, et ledit chemin est décalé (O) d'un chemin parfaitement droit, d'une première extrémité (212', 212'') dudit rayon (206, 206', 206'') à une seconde extrémité (212', 212'') dudit rayon (206, 206', 206").

2. Pneu non pneumatique (200) selon la revendication 1 dans lequel les première, troisième et cinquième valeurs de l'épaisseur du rayon (206, 206', 206'') sont sensiblement les mêmes.

3. Pneu non pneumatique (200) selon la revendication 2 dans lequel les deuxième et quatrième valeurs de l'épaisseur du rayon (206, 206', 206'') sont sensiblement les mêmes.

4. Pneu non pneumatique (200) selon la revendication 3 dans lequel les deuxième et quatrième valeurs de l'épaisseur du rayon (206, 206', 206'') sont approximativement de 60 % de la valeur des première, troisième et cinquième valeurs.

5. Pneu non pneumatique (200) selon la revendication 4 dans lequel le pneu est un pneu de taille 205/55N16, les première, troisième et cinquième valeurs de l'épaisseur du rayon (206, 206', 206'') est approximativement de 3,4 mm tandis que les deuxième et quatrième valeurs de l'épaisseur du rayon (206, 206', 206'') est approximativement de 2,0 mm, et le pneu comprend une pluralité de rayons (206, 206', 206'') de configuration similaire.

6. Pneu non pneumatique (200) selon la revendication 5 dans lequel la hauteur radiale du rayon (206, 206', 206'') est approximativement de 76 mm.

7. Pneu non pneumatique (200) selon la revendication 6 dans lequel le rayon (206, 206', 206") a un décalage (O) ou un écart de son chemin entre les deux extrémités (212', 212'') du rayon (206, 206', 206''), dans lequel le décalage (O) est de 25 % ou moins de la hauteur radiale du rayon (206, 206', 206''), et est, de préférence, environ de 15 % de la hauteur radiale du rayon (206, 206', 206'').

8. Pneu non pneumatique (200) selon la revendication 7 dans lequel le rayon (206, 206', 206'') est configuré pour se déformer élastiquement lorsqu'il est soumis à une déviation de 15 mm vers le centre du pneu le long de sa direction radiale.

9. Pneu non pneumatique (200) selon la revendication 1 dans lequel l'épaisseur du rayon (206, 206', 206'') augmente et diminue deux fois le long de la longueur du rayon (206, 206', 206''), et le rayon (206, 206', 206'') comprend quatre zones ou régions (222, 224, 226, 228) et a une ligne centrale le long de la longueur du rayon (206, 206', 206''), et dans lequel ladite ligne centrale a deux points d'inflexion (216, 218) et un point médian (220) se trouvant entre lesdits points d'inflexion (216, 218) le long de la ligne centrale.

10. Pneu non pneumatique (200) selon la revendication 9 dans lequel la première valeur de l'épaisseur du rayon (206, 206' , 206'') peut se trouver à une extrémité (212', 212'') du rayon (206, 206', 206'') et la cinquième valeur de l'épaisseur du rayon (206, 206', 206'') peut se trouver à l'autre extrémité (212', 212'') du rayon (206, 206', 206''), et dans lequel la première zone (222) est une région de transition entre ladite première extrémité (212', 212'') et un premier point d'inflexion (216) où l'épaisseur se réduit jusqu'à la deuxième valeur, la deuxième zone (224) est une région de transition entre le premier point d'inflexion (216) et le point médian (220) où l'épaisseur augmente jusqu'à une troisième valeur, la troisième zone (226) est une région de transition entre le point médian (220) et le second point d'inflexion (218) où l'épaisseur diminue jusqu'à la quatrième valeur, et la quatrième zone (228) est une région de transition entre le second point d'inflexion (218) et l'autre extrémité (212', 212'') du rayon (206, 206', 206'') où l'épaisseur augmente jusqu'à la cinquième valeur.

11. Pneu non pneumatique (200) selon la revendication 10 dans lequel les deuxième et quatrième valeurs de l'épaisseur est approximativement de 60 % de la valeur des première, troisième et cinquième valeurs.

12. Pneu non pneumatique (200) selon la revendication 11 dans lequel le pneu est un pneu de taille 205/55N16 et les première, troisième et cinquième valeurs du rayon (206, 206', 206'') est approximativement de 3,4 mm et les deuxième et quatrième valeurs de l'épaisseur du rayon (206, 206', 206'') est approximativement de 2,0 mm et le pneu comprend une pluralité de rayons (206, 206', 206") de configuration similaire.

13. Pneu non pneumatique (200) selon la revendication 12 dans lequel le rayon (206, 206', 206'') a une hauteur radiale approximativement de 76 mm.

14. Pneu non pneumatique (200) selon la revendication 13 dans lequel le rayon (206, 206', 206'') a un décalage (O) ou un écart du rayon (206, 206', 206'') d'un chemin parfaitement droit le long de la direction radiale, et ledit décalage (O) est de 25 % ou moins de la hauteur radiale du rayon, et est, de préférence, environ de 15 % de la hauteur radiale du rayon.

15. Pneu non pneumatique (200) selon la revendication 14 dans lequel le rayon (206, 206', 206'') est configuré pour se déformer élastiquement lorsqu'il est soumis à une déviation de 15 mm vers le centre du pneu le long de la direction radiale du pneu.

16. Pneu non pneumatique (200) selon la revendication 9 dans lequel la ligne centrale est construite à partir d'une série de courbes analytiques telles que des lignes et des arcs et le rayon (206, 206', 206'') comprend en outre des courbes limites qui sont également construites à partir de courbes analytiques telles que des lignes et des arcs.
